**Europäisches Patentamt**

**European Patent Office**

**Office européen des brevets**

(19)

(11) Veröffentlichungsnummer: **0 000 598**
**A1**

(12) # EUROPÄISCHE PATENTANMELDUNG

(21) Anmeldenummer: **78200083.0**

(22) Anmeldetag: **06.07.78**

(51) Int. Cl.²: **A 61 C 17/00,B 08 B 3/04**

(30) Priorität: **29.07.77 DE 2734287**

(43) Veröffentlichungstag der Anmeldung:
**07.02.79 Bulletin 79/3**

(84) Benannte Vertragsstaaten:
**CH DE FR GB NL SE**

(71) Anmelder: **Luik, Manfred**
**Ulmer Strasse 18**
**D-7250 Leonberg. (DE)**

(72) Erfinder: **Luik, Manfred**
**Ulmer Strasse 18**
**D-7250 Leonberg. (DE)**

(74) Vertreter: **Schweikhardt, Friedrich, Dipl.-Ing.**
**Robert-Bosch-Platz 1**
**D-7016 Gerlingen-Schillerhöhe. (DE)**

(54) **Gerät zum Reinigen von Zahnprothesen.**

(57) Gerät zum Reinigen von Zahnprothesen mit einem Sockel (1), in dem sich eine elektrisch angetriebene Membranluftpumpe (9) befindet, und einem Reinigungsgefäss (24), das auf den Sockel (1) gesetzt wird. Der Auslass (20) der Luftpumpe (9) und eine in das Innere des Gefässes führende Leitung (26) greifen beim Aufsetzen des Gefässes dichtend in einander. Die Leitung (26) mündet in einem feinporigen Verteiler (29). Die aus diesem austretenden Luftbläschen sind so klein, dass sie den ganzen Querschnitt des im Gefäss liegenden Reinigunsraumes (34) füllen. In diesen kann eine Dose (39) eingesetzt werden, welche die zu reinigenden Prothesen aufnimmt. Einrichtungen zum Regeln der Luftmenge und zum dosierten Zuteilen von Reinigungsflüssigkeit können vorgesehen sein.

Fig.1

EP 0 000 598 A1

## Gerät zum Reinigen von Zahnprothesen

Die Erfindung bezieht sich auf ein Gerät zum Reinigen von Zahnprothesen mit einem eine Luftpumpe enthaltenden Sockel und einem in einem Reinigungsraum mindestens eine Prothese aufnehmenden, zum Reinigen mit Flüssigkeit gefüllten becherartigen, auf dem Sockel abstellbaren Gefäß, in das zum Reinigen Luft eingeführt wird.

Aus dem DE-GM 76 22 513 ist es bekannt, die Luft von der Pumpe durch eine biegsame Leitung von oben her in das Gefäß einzuführen. Am Ende der Leitung befindet sich eine Düse. Die Leitung muß zum Abnehmen des Gefäßes aus diesem herausgenommen, beim Reinigen in diesem gehalten werden. Der von der Düse ausgehende Luftstrahl kann nicht die ganze zu reinigende Prothese erfassen. Die Leitung muß daher während des ganzen Reinigens mit der Hand gehalten und im Gefäß bewegt werden. Die Luft tritt dabei in verhältnismäßig großen Bläschen aus, so daß sich diese nicht gleichmäßig in der Flüssigkeit verteilen. Das bekannte Gerät ist daher umständlich zu handhaben und hat keine ausreichende Reinigungswirkung.

Es besteht deshalb die Aufgabe, ein Gerät zu entwickeln, das selbsttätig arbeitet und sicher wirkt.

Diese Aufgabe wird nach der Erfindung dadurch gelöst, daß der Auslaß der Luftpumpe und eine die Luft in das Gefäß führende Leitung bei auf den Sockel aufgesetztem Gefäß dichtend in einander greifen, aber durch Abnehmen des Gefäßes von einander trennbar sind, und daß zwischen der Leitung, welche die Luft
in das Gefäß führt, und dem Inneren des Gefäßes ein Mittel angebracht ist, welches bei abgenommenem Gefäß das Ausfließen
von Flüssigkeit verhindert.

Bei einem solchen Gerät kann der Becher wie bisher vom Sockel
abgenommen und gefüllt werden. Die zu reinigende Prothese ist
bequem von oben einzulegen. Ist das Gefäß aufgesetzt, so ist
selbsttätig das ganze Gerät funktionell verbunden. Die Luft
gelangt unmittelbar unter die zu reinigende Prothese und kann
daher optimal wirken, das Gerät arbeitet allein und ohne Mithilfe so lange es gewünscht wird.

Das Mittel, welches das Ausfließen von Flüssigkeit bei abgenommenem Gefäß verhindert, kann ein besonderes Rückschlagventil sein oder auch darin bestehen, daß ein Verteiler für die
zugeführte Luft so ausgebildet ist, daß er das Durchtreten von
Flüssigkeit verhindert, zum Beispiel durch besonders feinporige Ausbildung. Diese trägt auch dazu bei, daß die zugeführte
Luft in sehr kleine Bläschen zerteilt wird, welche sich in der
ganzen, das Gefäß füllenden Flüssigkeit ausbreiten und nicht
nur rasch nach oben steigen. So können auf der Stirnseite und
an den Seitenflächen des Verteilers austretende Bläschen den
ganzen Querschnitt eines in dem Gefäß liegenden Reinigungsraumes erfüllen. Sie reinigen dadurch schnell und wirksam.

Es ist von besonderem Vorteil, wenn in den Reinigungsraum
eine die zu reinigenden Prothesen aufnehmende Dose eingesetzt
ist, deren durchlöcherter, abnehmbarer Deckel während des
Reinigens nach unten gerichtet ist, deren Boden ein Loch hat
und die nahezu den ganzen Querschnitt des Reinigungsraums
ausfüllt. Dadurch wird das Einsetzen und besonders das Herausnehmen der Prothesen erleichtert. Der Boden der Dose kann unmittelbar auf den Verteiler gelegt werden und bildet damit
eine Auflage für die Prothesen im Reinigungsraum, so daß
keine besondere Auflage nötig ist.

Zweckmäßig kann es auch sein, an dem Sockel einen Zeitschalter für den Antrieb der Luftpumpe anzubringen, der das Gerät abschaltet, wenn die Reinigung erfahrungsgemäß beendet ist. Ferner kann es vorteilhaft sein, eine Zuteileinrichtung vorzusehen, die ebenfalls am Sockel angebracht ist und willkürlich eine bestimmte Menge Reinigungsmittel in den Reinigungsraum fördert. Zweckmäßigerweise wird sie wie der Pumpenauslaß selbsttätig mit dem Innern des Gefäßes verbunden, wenn dieses auf den Sockel aufgesetzt wird.

Die Erfindung wird an Hand von Zeichnungen näher erläutert. Es zeigen

Fig.1 einen Schnitt durch eine erste,

Fig.2 einen Schnitt durch eine zweite Ausführungsform. Bei dem Reinigungsgerät nach Fig.1 enthält ein Sockel 1 einen durch Wechselstrom erregbaren Magneten 2, dessen Spule ein Zeitschalter 3 zugeordnet ist. Er kann mit Hilfe eines Drehknopfes 4 auf eine gewünschte Reinigungszeit eingestellt werden. Dem Elektromagneten 2 liegt ein Anker 5 gegenüber, der an einem Arm 6 angebracht ist, der seinerseits mit Hilfe einer Feder 7 schwingend an dem Gehäuse des Sockels 1 befestigt ist.

An dem Deckel 8 des Sockels 1 ist eine Luftpumpe 9 befestigt. Sie besteht aus einem Pumpenkörper 10, an dessen Unterseite mit Hilfe einer Membran 11 ein Pumpraum 12 gebildet ist, einem die Membran 11 mit dem Arm 6 verbindenden Bolzen 13 und Ventilen. Von dem Pumpraum 12 führt über ein Saugventil 14 ein Kanal 15 des Pumpenkörpers 10 durch einen Luftfilter 16 ins Innere des Sockels, das durch Öffnungen 17 mit der Außenluft verbunden ist. Der Auslaß 18 der Luftpumpe führt über ein Druckventil 19 zu einem Stutzen 20, der über den Deckel 8 vorsteht und eine O-Ringdichtung 21 trägt. Seitlich zweigt von dem Auslaß 18 eine Öffnung 22 ab, die ebenfalls ins Innere des Sockels 1 führt. In die Öffnung ragt das spitze Ende einer

- 4 -

Schraube 23, die in einer Wand des Sockels 1 sitzt und je nach
ihrer Lage die Öffnung 22 mehr oder weniger verschließt. Saugventil 14 und Druckventil 19 haben als Schließglied jeweils
eine aus elastischem Werkstoff bestehende Klappe.

Auf dem Sockel 1 steht ein Gefäß 24 in Form eines Bechers. Mit
seinem Boden 25 ist eine in das Innere des Gefäßes ragende
Hülse 26 verbunden, deren Inneres eine auf den Stutzen 20 und
seine Dichtung 21 passende Aussparung 27 bildet. In das obere
Ende der Hülse 26 ist ein als Kugelventil ausgebildetes
Rückschlagventil 28 eingesetzt. Auf der Hülse ist dichtend ein
Verteiler 29 befestigt, der einen Hohlraum 30 enthält und aus
porösem Werkstoff besteht. Der Hohlraum ist mit der Aussparung 27 verbunden.

Über den Verteiler 29 ist eine becherförmige Unterlage 31 gestülpt, die auf dem Boden 25 des Gefäßes 24 steht und deren
oben liegender Boden 32 zahlreiche Löcher 33 hat. Die Unterlage
nimmt im wesentlichen den ganzen Querschnitt des im Innern des
Gefäßes 24 gebildeten Reinigungsraumes 34 ein.

Das Gefäß 24 wird nach oben durch einen abnehmbaren Deckel 35
abgeschlossen, der in der Mitte ein Entlüftungsloch 36 hat.
Es wird auf der Innenseite des Deckels 35 von einer Spritzschutzscheibe 37 überdeckt, die das Herausspritzen von Wasser
verhindert, deren Halter 38 aber Luft durchtreten läßt.

In den Reinigungsraum 34 kann eine Dose 39 eingeführt werden,
die den zu reinigenden Gegenstand aufnimmt. Sie füllt nahezu
den ganzen Querschnitt des Reinigungsraums und liegt darin
mit einem Deckel 40 nach unten, der zahlreiche Löcher 41 hat.
Der Boden 42 der Dose hat ein Loch 43. Auf der Unterseite des
Sockels 1 sind Füßchen 44 aus nicht rutschendem Material angebracht.

- 5 -

Der Sockel wird abgestellt oder auf nicht dargestellte, bekannte Weise an einer Wand befestigt, zum Beispiel in einen Wandhalter gesteckt. Das Gefäß 24 wird abgenommen, geöffnet und an einem Wasserhahn zum großen Teil mit Wasser gefüllt. Das Rückschlagventil 28 verhindert dabei sicher das Ausfließen des Wassers. Ein paar Tropfen eines Reinigungs- oder Desinfizierungsmittels können hinzugegeben werden.

Der zu reinigende Gegenstand wird bei abgenommenem Deckel 40 in die Dose 39 gelegt; diese wird dann verschlossen und umgekehrt in den Reinigungsraum 34 gesenkt. Der Deckel 35 kommt wieder auf das Gefäß 24, das Gefäß wird auf den Sockel 1 gesetzt und zentriert sich an dem Stutzen 20. Die O-Ring-Dichtung verhindert das Austreten von Luft oder Wasser.

Dann wird durch Betätigen des Zeitschalters 3 der Elektromagnet 2 für eine gewünschte Zeitspanne mit Strom versorgt, der Anker 5 schwingt und treibt die Membran 11 an. Diese pumpt in bekannter Weise Luft vom Luftfilter 16 in den Verteiler 29. Von dort dringt die Luft fein verteilt in das Wasser unterhalb der Unterlage 31. Dabei bilden sich zahlreiche feine Bläschen, die durch die Löcher 33 und 41 ins Innere der Dose 39 dringen, dort das Wasser in Bewegung bringen und durch ihre Oberflächenwirkung den eingebrachten Gegenstand rasch reinigen. Die Luft entweicht dann durch das Loch 43 der Dose und das Entlüftungsloch 36 des Gefäßes 24. Die Dose kann dabei je nach der Höhe des Wasserspiegels im Reinigungsraum 34 und der Menge der zugeführten Luft auf- und absteigen. Das führt dazu, daß sich der zu reinigende Gegenstand immer im Bereich des Wasserspiegels befindet; dort ist die Reinigungswirkung am größten.

Nach beendeter Reinigung kann das Gefäß 24 wieder vom Sockel 1 getrennt werden. Die Dose 39 wird herausgenommen und kann samt ihrem Inhalt unter fließendem Wasser abgespült werden, worauf der gereinigte Gegenstand entnommen werden kann.

Das Reinigungsgerät kann auch ohne die Dose 39 wirksam betrieben werden, wenn an die Handhabung geringere Anforderungen gestellt werden. Das Gefäß 24 läßt sich wie ein Becher benützen und zum Füllen und Nachspülen unter einen Wasserhahn halten; der zu reinigende Gegenstand wird dann unmittelbar auf die Unterlage 31 gelegt.

Bei geeigneter Ausbildung des Verteilers 29 läßt dieser kein Wasser nach unten abfließen, und das Rückschlagventil 28 kann weggelassen werden.

Ist die Schraube 23 ganz eingedreht, so verschließt sie die Öffnung 22, und die volle von der Luftpumpe geförderte Luftmenge wird in den Reinigungsraum geblasen. Ist das zu viel, kann durch Herausdrehen der Schraube ein Teil der Luft ins Freie abgelassen werden. Bei entsprechend dimensionierter Luftpumpe und gleichbleibendem Verwendungszweck kann die Regeleinrichtung für die Luftmenge auch weggelassen werden.

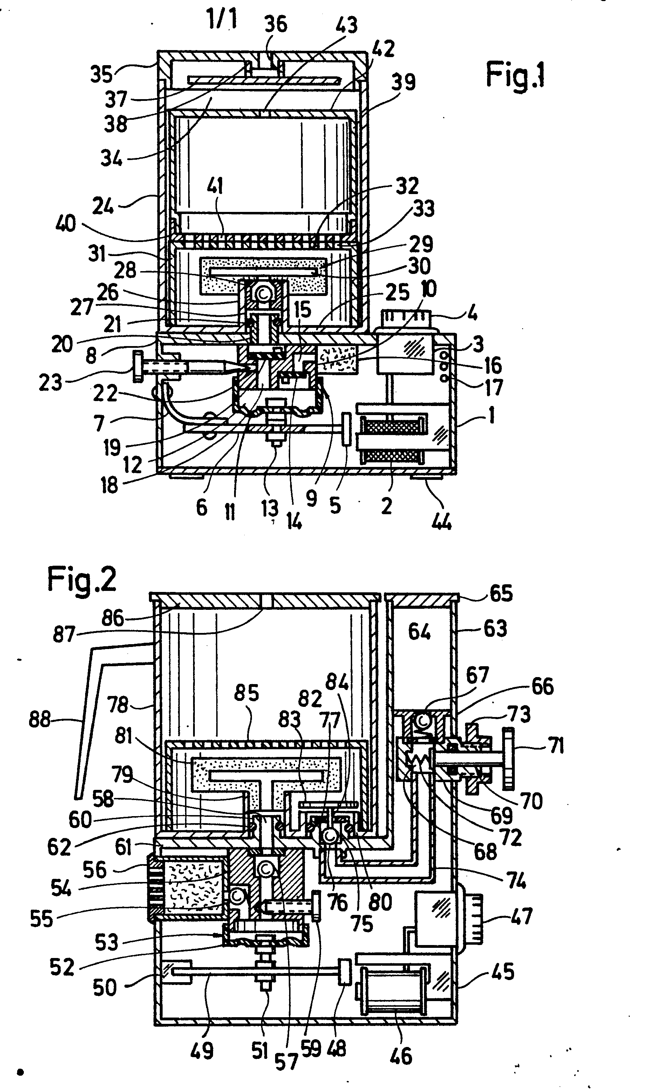

Bei dem Ausführungsbeispiel nach Fig.2 ist in einem Sockel 45 ähnlich wie bei dem vorhergehenden Ausführungsbeispiel ein Elektromagnet 46 und ein zugehöriger Zeitschalter 47 angebracht. Ein Anker 48 sitzt an einem federnden Arm 49, der in einem Vorsprung 50 des Sockels eingespannt und durch einen Bolzen 51 mit einer Membran 52 einer Luftpumpe 53 verbunden ist. Der Pumpenkörper 54 enthält ein Saugventil 55, an das sich ein nach außen offenes Luftfilter 56 schließt, und ein Druckventil 57 im Auslaß 58 der Pumpe. Beide Ventile sind als Kugelventile ausgebildet. Eine Schraube 59 ragt in den Auslaß und verschließt ihn je nach der gewünschten Fördermenge mehr oder weniger. Der Auslaß 58 mündet in einen Stutzen 60, der über den Deckel 61 des Sockels 45 vorsteht und eine O-Ring-Dichtung 62 trägt.

In einem Aufsatz 63 des Sockels 45 ist ein Vorratsbehälter 64 mit abnehmbarem Deckel 65 für eine Reinigungsflüssigkeit angebracht. An ihn schließt sich eine Zuteileinrichtung 66. Sie besteht aus einem Saugventil 67, an das sich ein Pumpraum 68 schließt, der in einem Gehäuse 69 liegt, in dem dichtend ein Kolben 70 geführt ist. Dieser endet außen mit einer Scheibe 71 und wird von einer Feder 72 nach außen gedrückt. Auf die Außenseite des Gehäuses 69 ist ein Stellring 73 geschraubt. Von dem Pumpraum 68 führt eine Leitung 74 zu einem zweiten, über den Deckel 61 des Sockels 45 vorstehenden Stutzen 75, der ein Druckventil 76 enthält und eine O-Ring-Dichtung 77 trägt.

Ein becherförmiges Gefäß 78 sitzt auf dem Sockel 45 und greift passend und dichtend mit einer Hülse 79 über den Stutzen 60 und mit einer Hülse 80 über den Stutzen 75. Die Hülse 79 ist dicht mit einem Verteiler 81 verbunden, die Hülse 80 mit einem Rückschlagventil 82 versehen. Dessen tellerförmiges Schließglied 83 ist mit einem Hubstift 84 verbunden, der durch die Aussparung der Hülse in den Bereich des Druckventils 76 greift. In dem Gefäß 78 befindet sich eine becherförmige Unterlage 85 mit durchlochtem Boden, die der Unterlage 31 nach Fig.1 entspricht. Ein Deckel 86 mit Loch 87 schließt das Gefäß 78 nach oben ab, ein Handgriff 88 erleichtert die Handhabung.

Zum Füllen mit Wasser wird das Gefäß 78 vom Sockel abgenommen. Der Verteiler 81 und das Rückschlagventil 82 verhindern dabei das Auslaufen des Wassers. Dann wird das Gefäß auf den Sockel gesetzt. Seine Hülsen 79 und 80 greifen dabei dichtend über die Stutzen 60 und 75. Der Hubstift 84 trifft dabei auf das als Kugel ausgebildete Schließglied des Druckventils 76, und das Rückschlagventil 82 wird geöffnet.

- 8 -

Drückt man auf die Scheibe 71 des Kolbens 70, so verdrängt
dieser Reinigungsflüssigkeit aus dem Pumpraum 68 durch das
Druckventil 76 in das Innere des Gefäßes 78. Wird er losgelassen, so schiebt ihn die Feder 72 wieder nach außen; dabei
saugt er Reinigungsflüssigkeit aus dem Vorratsbehälter 64
durch das Saugventil 67 an. Wie viel jeweils gefördert wird,
richtet sich nach dem Hub des Kolbens bis zu dem durch den
Stellring 73 gebildeten, einstellbaren Anschlag.

Danach wird der Elektromagnet 46 eingeschaltet,
und die weiteren Vorgänge spielen sich ab wie zu Fig.1 beschrieben.

In das Gefäß 24,78 der Reinigungsvorrichtung kann selbstverständlich statt Wasser auch eine andere Flüssigkeit eingefüllt
werden, je nach dem, wie es der zu reinigende Gegenstand verlangt. Bei geeigneter Ausbildung des Verteilers kann dieser
selbst als Unterlage für den zu reinigenden Gegenstand dienen,
der dabei insbesondere auf Vorsprüngen des Verteilers ruht.
Da bei dem Reinigungsgerät keine hohen Drücke oder starken Belastungen auftreten, könne seine Teile weitgehend aus Kunststoff hergestellt, insbesondere gespritzt werden, was eine
kostengünstige Fertigung erlaubt.

Die Luftmenge kann statt durch die beschriebenen Schrauben auch
mit Hilfe elektrischer oder elektronischer Mittel geregelt werden, die dem Elektromagneten mehr oder weniger Energie zuführen.
Für viele Fälle wird es ausreichen, lediglich zwei Stufen zu
schalten. Das Gerät nach der Erfindung läßt sich auch ohne
Zeitschalter vorteilhaft verwenden, da es einerseits auf eine
genaue Zeitdauer nicht ankommt, andererseits derjenige, der
das Gerät benützt, ein gewisses Gefühl für die erforderliche
Zeit bekommt.

0000598

Patentansprüche

1. Gerät zum Reinigen von Zahnprothesen mit einem eine Luftpumpe enthaltenden Sockel und einem in einem Reinigungsraum
mindestens eine Prothese aufnehmenden, zum Reinigen mit Flüssigkeit gefüllten becherartigen, auf dem Sockel abstellbaren
Gefäß, in das zum Reinigen Luft eingeführt wird, dadurch gekennzeichnet, daß der Auslaß der Luftpumpe (9,53) und eine die
Luft in das Gefäß (24,78) führende Leitung bei auf den Sockel
(1,45) aufgesetztem Gefäß dichtend in einander greifen, aber
durch Abnehmen des Gefäßes von einander trennbar sind, und daß
zwischen der Leitung, welche die Luft in das Gefäß führt, und
dem Inneren des Gefäßes ein Mittel angebracht ist, welches bei
abgenommenem Gefäß das Ausfließen von Flüssigkeit verhindert.

2. Gerät nach Anspruch 1, dadurch gekennzeichnet, daß der Auslaß der Luftpumpe (9,53) als Stutzen (20,60) ausgebildet ist,
der in eine Aussparung (27) des Gefäßes (24,78) ragt.

3. Gerät nach Anspruch 1 oder 2, dadurch gekennzeichnet, daß
die Aussparung (27) in der als Hülse (26) ausgebildeten, die
Luft in das Gefäß (24,78) führenden Leitung angebracht und daß
in diese ein Rückschlagventil (28) eingesetzt ist.

4. Gerät nach einem der Ansprüche 1 bis 3, dadurch gekennzeichnet, daß die in das Gefäß (24,78) führende Leitung im Inneren
eines Verteilers (29) mündet, der aus feinporigem Werkstoff
besteht und einen so großen Teil des Querschnitts des im Gefäß befindlichen Reinigungsraums (34) einnimmt, daß er im wesentlichen den ganzen Querschnitt dieses Reinigungsraums (34)
mit durchperlender Luft versorgt.

5. Gerät nach Anspruch 4, dadurch gekennzeichnet, daß der Verteiler (29) eine wagrechte Stirnfläche hat, welche den Querschnitt des Reinigungsraums (34) zu einem wesentlichen Teil ausfüllt und als Auflagefläche dienen kann.

6. Gerät nach einem der Ansprüche 1 bis 5, daurch gekennzeichnet, daß in den Reinigungsraum (34) eine die zu reinigenden Prothesen aufnehmende Dose (39) eingesetzt ist, deren durchlöcherter, abnehmbarer Deckel (40) während des Reinigens nach unten gerichtet ist, deren Boden (42) ein Loch hat und die nahezu den ganzen Querschnitt des Reinigungsraums (34) ausfüllt.

7. Gerät nach einem der Ansprüche 1 bis 6, dadurch gekennzeichnet, daß an dem Sockel (1,45) ein den Antrieb der Luftpumpe (9,53) steuernder Zeitschalter (3,47) und insbesondere auch eine die geförderte Luftmenge beeinflussende Regeleinrichtung angebracht ist.

8. Gerät nach einem der Ansprüche 1 bis 7, dadurch gekennzeichnet, daß mit dem Sockel (45) des Geräts eine Zuteileinrichtung (66) verbunden ist, die willkürlich eine bestimmte, insbesondere einstellbare Menge Reinigungsmittel in den Reinigungsraum (34) fördert.

9. Gerät nach Anspruch 8, dadurch gekennzeichnet, daß die Zuteileinrichtung (66) einen Vorratsbehälter (64) hat, an den sich über ein Saugventil (67) ein Pumpraum (63) schließt, in den ein von außen betätigbarer Kolben (70) ragt, und daß zwischen diesem Pumpraum und dem Gefäß (73) ein Druckventil (76) angebracht ist.

10. Gerät nach Anspruch 14, dadurch gekennzeichnet, daß der Sockel (45) einen zweiten Stutzen (50) hat, in dem insbesondere das Druckventil (76) untergebracht ist und der bei aufgesetztem Gefäß (73) in eine zweite Ausnehmung des Gefäßes abgedichtet eingreift.

0000598

1/1

Fig.1

Fig.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| E,P | DE – A – 2 627 539 (WAGNER) <br><br> * Seite 3, Absatz 2, bis Seite 4, Absatz 2; Ansprüche 9-12; Figur 2 * <br><br> --- | 1,2,3,4 |
|  | DE – A – 2 211 274 (WOOG) <br><br> * Seite 12, Absatz 1; Anspruch 1 * <br><br> --- | 1,2,3 |
|  | DE – A – 1 902 655 (AQUA TEC) <br><br> * Seite 6, Zeilen 15 bis 24 * <br><br> --- | 1,2,3 |
|  | DE – A – 1 802 838 (SOPHINDAR) <br><br> * Seite 11, letzter Absatz; Figur 5 * <br><br> --- | 1,2,3 |
|  | DE – A – 1 566 188 (AQUA-TEC) <br><br> * Seite 10, Zeilen 3 bis 14; Figur 3 * <br><br> --- | 1,2,3 |
|  | DE – A – 1 528 366 (AQUA-TEC) <br><br> * Seite 13 (03), Zeile 1 bis Seite 14 (04), Zeile 17; Ansprüche 1-5 * <br><br> --- | 1,2,3 |
|  | GB – A – 1 275 503 (SUNBEAM) <br><br> * Seite 3, Zeilen 59 bis 75 * <br><br> --- <br><br> ./. | 1,2,3 |

**KLASSIFIKATION DER ANMELDUNG (Int.Cl.²)**

A 61 C 17/00
B 08 B 3/04

**RECHERCHIERTE SACHGEBIETE (Int. Cl.²)**

A 61 C 17/00
A 61 C 17/02
B 08 B 3/04
B 08 B 3/10
B 08 B 3/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-10-1978 | PESCHEK |

EPA form 1503.1 06.78

Europäisches
Patentamt

**EUROPÄISCHER RECHERCHENBERICHT**

0000598
Nummer der Anmeldung

EP 78 20 0083

| | **EINSCHLÄGIGE DOKUMENTE** | | **KLASSIFIKATION DER ANMELDUNG (Int.Cl.²)** |
|---|---|---|---|
| Kategorie | Kennzeichnung des Dokuments mit Angabe, soweit erforderlich, der maßgeblichen Teile | betrifft Anspruch | |
| | US - A - 3 773 046 (ROSENBERG) <br> * Spalte 2, Zeilen 26 bis 52 * <br> --- <br> US - A - 3 495 587 (FREEDMAN) <br> * Spalte 2, Zeile 69 bis Spalte 3, Zeile 58; Spalte 5, Zeilen 13 bis 33 * <br> ---- | 1,2,3 <br><br><br> 1,2,3 | **RECHERCHIERTE SACHGEBIETE (Int. Cl.²)** |